**Europäisches Patentamt**

**European Patent Office**

**Office européen des brevets**

(19)

(11) Veröffentlichungsnummer: **0 224 948**
B1

# (12) EUROPÄISCHE PATENTSCHRIFT

(45) Veröffentlichungstag der Patentschrift:
**19.04.89**

(51) Int. Cl.⁴: **B01D 46/30**

(21) Anmeldenummer: **86201926.2**

(22) Anmeldetag: **05.11.86**

(54) **Granulatfilter.**

(30) Priorität: **21.11.85 DE 3541174**

(43) Veröffentlichungstag der Anmeldung:
**10.06.87 Patentblatt 87/24**

(45) Bekanntmachung des Hinweises auf die Patenterteilung:
**19.04.89 Patentblatt 89/16**

(84) Benannte Vertragsstaaten:
**CH DE FR GB IT LI**

(56) Entgegenhaltungen:
**DE-A- 1 911 837**
**DE-A- 2 325 695**

(73) Patentinhaber: **METALLGESELLSCHAFT AG,**
**Reuterweg 14 Postfach 3724, D-6000 Frankfurt/M.1(DE)**

(72) Erfinder: **Leussler, Wilhelm, Westerbachstrasse 255,**
**D-6230 Frankfurt am Main 80(DE)**

(74) Vertreter: **Rieger, Harald, Dr., Reuterweg 14,**
**D-6000 Frankfurt am Main(DE)**

EP 0 224 948 B1

## Beschreibung

Die Erfindung bezieht sich auf ein Granulatfilter für horizontalen Gasdurchtritt mit zwei im Abstand zueinander vertikal angeordneten, gasdurchlässigen Wänden, einem aus einem Bodenteil und zwei Seitenteilen bestehenden, mit den Wänden verbundenem Rahmen und einer Granulatschüttung in dem aus dem Rahmen und den Wänden gebildeten Raum sowie auf ein Verfahren zur Reinigung der Granulatschüttung durch Rückspülung.

Die Reinigung der Granulatschüttung erfolgt bei herkömmlichen Filtern dieser Art außerhalb des Filters in einer besonderen Reinigungskammer, wobei das Granulat entweder in zeitlichen Abständen chargenweise gereinigt wird oder indem das Granulat kontinuierlich durch den Filterraum und die Reinigungskammer umläuft. Derartige Reinigungsverfahren erfordern aufwendige Transporteinrichtungen für das Granulat, die bei chargenweisem Betrieb immer nur kurzfristig benötigt werden und wegen der langen Stillstandszeiten und des häufigen Ein- und Ausschaltens sehr störanfällig bzw. wartungsbedürftig sind. Bei kontinuierlichem Umlauf unterliegen alle betroffenen Apparateteile einem starken Verschleiß. Außerdem erfährt das Granulat einen verhältnismäßig starken Abrieb, durch den die Filtercharakteristik verändert und eine Erhöhung des gasseitigen Strömungwiderstandes bewirkt wird.

Es ist daher auch schon vorgeschlagen worden, die Granulatschüttung für die Reinigung im Filter zu belassen, den Gasdurchgang abzusperren und mit gereinigtem Gas oder einem anderen Medium rückzuspülen. Auf diese Weise können aber die aus dem Gas abgeschiedenen und auf dem Granulat abgelagerten Verunreinigungen nur unvollkommen entfernt werden. Eine gewisse Verbesserung kann erreicht werden, wenn die Granulatschüttung während der Rückspülung durch Klopfwerke oder dergleichen erschüttert wird. Nachteilig ist aber, daß jede Erschütterung des Filterbettes mit einem gewissen Granulatabrieb verbunden ist und zwangsläufig zu einer Verdichtung der Schüttung führt, wodurch ebenfalls die Filtercharakteristik verändert und der Strömungswiderstand erhöht wird.

Es besteht somit die Aufgabe, ein Granulatfilter der eingangs genannten Art so zu gestalten, daß die vorgenannten Nachteile vermieden werden können. Insbesondere soll die Reinigung der Granulatschüttung mittels Rückspülung mit möglichst geringem Granulatabrieb verbunden sein, wenig Energieaufwand erfordern und keine Veränderung der Filtercharakteristik oder Vergrößerung des Strömungswiderstandes mit sich bringen.

Diese Aufgabe wird erfindungsgemäß dadurch gelöst, daß bei einem gattungsmäßigen Granulatfilter im Bodenteil des Rahmens wenigstens eine, durch einen auf und ab bewegbaren Kolben granulatdicht verschlossene Öffnung angeordnet ist.

Durch die Kolbenbewegung kann die Granulatschüttung während der Reinigung durch Rückspülung aufgelockert werden, wodurch die Abreinigung im Vergleich zu einer Rückspülung bei unbewegter Granulatschüttung wesentlich verbessert werden kann. Hubhöhe und Hubgeschwindigkeit des Kolbens können auf die jeweiligen Bedürfnisse abgestimmt werden, wodurch sich in jedem Einzelfall ein wirtschaftliches Optimum erreichen läßt, d.h. gleichzeitig hohe Abreinigungswirkung und geringer Granulatabrieb.

Zweckmäßige Weiterbildungen des Erfindungsgedankens sind in den Ansprüchen 2 bis 13 beschrieben.

Bei dem Verfahren zum Betreiben des Granulatfilters ist erfindungsgemäß vorgesehen, daß die Granulatschüttung vor und/oder während der Rückspülung durch Auf- und Abbewegen der Kolben aufgelockert wird. Vorteilhafte Variationen des Verfahrens ergeben sich aus den Ansprüchen 15 bis 17.

Weitere Einzelheiten und Vorteile des Erfindungsgedankens werden anhand des in den Figuren dargestellten Ausführungsbeispiels näher erläutert.

Figur 1 zeigt in perspektivischer Darstellung den prinzipiellen Aufbau eines Granulatfilters.

Figur 2 zeigt in einem vertikalen Teilschnitt die Anordnung der Bodenöffnungen und Kolben.

Figur 3 zeigt Ansicht und horizontalen Schnitt eines vereinfacht dargestellten Granulatfilters mit Kurbelantrieb für die Kolben.

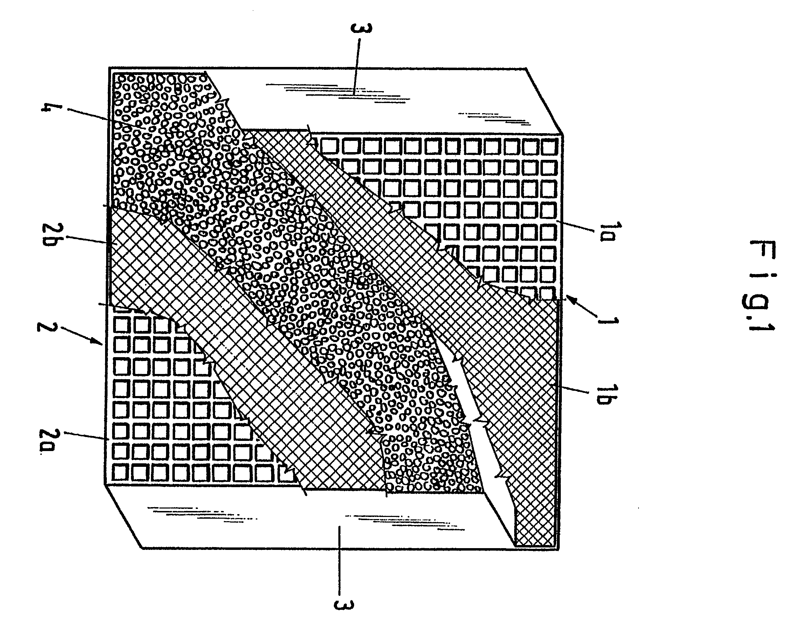

Das Granulatfilter für horizontalen Gasdurchtritt gemäß Figur 1 besitzt zwei im Abstand zueinander vertikal angeordnete gasdurchlässige Wände 1 und 2 mit jeweils einem Lochblech 1a, 2a sowie einem auf die Granulatpartikel abgestimmten Drahtsieb 1b, 2b. Die gasdurchlässigen Wände 1 und 2 bilden zusammen mit dem nach oben offenen Rahmen 3 einen Raum, in dem die Granulatschüttung 4 angeordnet ist. Zur Verdeutlichung des Aufbaus sind die Wandteile und die Granulatschüttung nur teilweise dargestellt. In Gasströmungsrichtung folgen in der Darstellung von vorn nach hinten aufeinander Lochblech 2a, Drahtsieb 2b, Granulatschüttung 4, Drahtsieb 1b und Lochblech 1a.

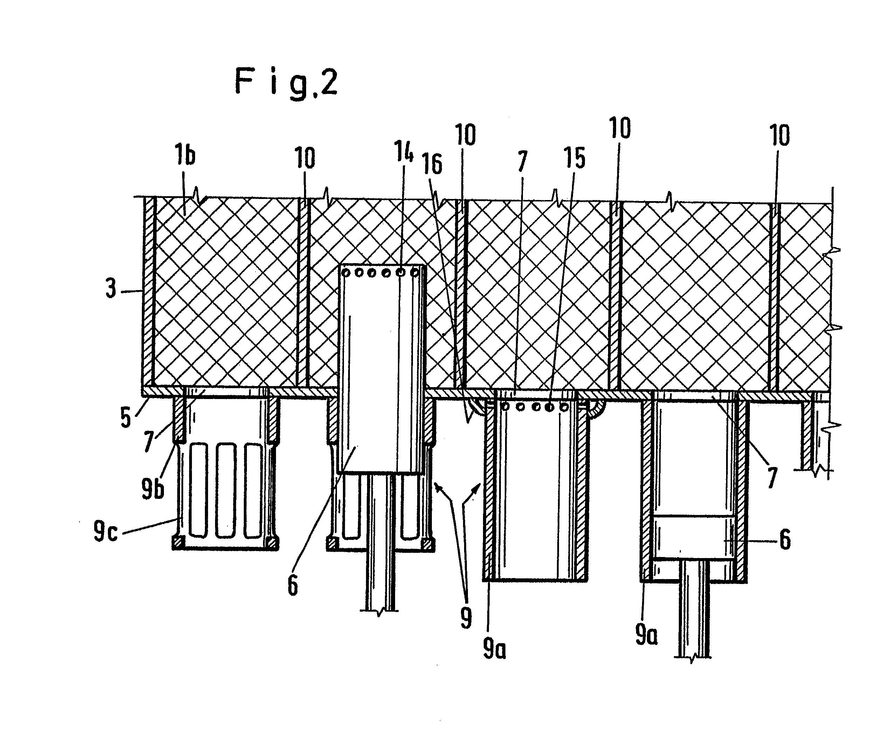

Aus der Darstellung gemäß Figur 2 ist ersichtlich, wie im Bodenteil 5 des Rahmens 3 Öffnungen 7 angeordnet sind, die durch auf und ab bewegbare Kolben 6 granulatdicht verschlossen werden können. Die Granulatschüttung ist durch Zwischenwände 10 in Kammern unterteilt, denen je eine Öffnung 7 mit Kolben 6 zugeordnet ist. Zum besseren Verständnis sind die Kolben in Figur 2 nur für die zweite und vierte Kammer von links dargestellt.

Die Kolbenführungen 9 können entweder in Form von sich vom Bodenteil 5 aus nach unten erstreckenden Zylindern 9a oder in Form von kurzen Zylindern 9b mit sich daran anschließenden Stegen 9c ausgebildet sein. Dementsprechend können entweder Kolben mit einer Mantelhöhe H von 0,4 bis 0,5 D (= Kolbendurchmesser) oder aber mit einer Mantelhöhe H von 2,5 bis 3 D vorgesehen sein. 1b bezeichnet wieder das ausgangsseitige Drahtsieb des hier ohne Granulatfüllung dargestellten vertikalen Teilschnitts des Granulatfilters. Ferner ist vorgesehen, daß entweder die Kolben 6 oder die Kolbenführungen 9 Bohrungen 14, 15 zum Einblasen von Spülluft in den Raum zwischen Kolben 6 und Kolbenführung 9 aufweisen. Die Zufuhr der Spülluft an die Kolbenführung erfolgt durch eine Ringleitung 16. Für die Zuführung von Spülluft an den Kolben, die in Figur 2 im einzelnen nicht dargestellt ist, können aus dem Motorenbau bekannte Vorrichtungen verwendet werden.

Es sei noch darauf hingewiesen, daß Figur 2 für die erste und zweite Kammer eine andere Ausführungsform des Kolbens und der Kolbenführung aufweist als für die Kammern 3 und 4. Diese Darstellungsweise ist gewählt worden, um die Zahl der Zeichnungen nicht unnötig erhöhen zu müssen. In der Praxis wird man selbstverständlich die gleiche Ausführungsform für alle Kammern eines Granulatfilters wählen.

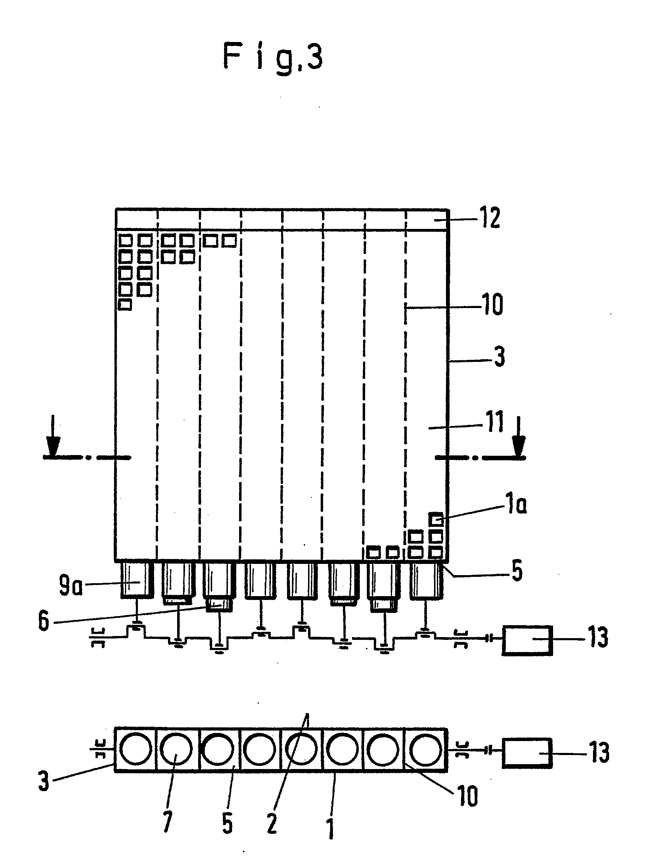

In Figur 3 ist eine vereinfachte Ansicht und ein vereinfachter Horizontalschnitt des Ausführungsbeispiels, ergänzt durch einen Antrieb für die Kolben, dargestellt. Das Lochblech 1a weist im oberen Teil eine Abdeckung 12 auf, mittels derer der oberste Bereich der Granulatschüttung für den Gasdurchgang gesperrt ist. Auf diese Weise wird sichergestellt, daß dem Gas keine granulatfreien Querschnittsbereiche zur Verfügung stehen, die es – zudem bei geringerem Druckverlust – ungereinigt durchströmen könnte. Durch Zwischenwände 10 sind innerhalb der Seitenwände des Rahmens 3 mehrere Kammern 11 gebildet, denen im Bodenteil je eine Öffnung 7 mit Kolbenführung 9a und Kolben 6 zugeordnet ist. Für die Auf- und Abbewegung ist eine Kurbelwelle vorgesehen, die über einen Antrieb 13 in Drehbewegung versetzt werden kann. Eine derartige Ausführungsform bedingt, daß gleichzeitig die Granulatschüttungen in allen Kammern eines Granulatfilters der Auflockerung unterworfen werden, d.h. daß das Granulatfilter in diesem Fall insgesamt mittels Rückspülung gereinigt wird. Selbstverständlich können auch hydraulische oder pneumatische Einzelantriebe für die Kolben vorgesehen werden, so daß – in Verbindung mit einer entsprechenden gasseitigen Teilabsperrung – die Kammern nacheinander gereinigt werden können, wobei das Granulatfilter im übrigen betriebsbereit bleibt. Neben der weitgehend freien Wahl des Kolbenhubs und der Kolbengeschwindigkeit, ist damit eine weitere Möglichkeit geschaffen, die es erlaubt, den Erfindungsgedanken an die Bedingungen des Einzelfalls anzupassen.

**Patentansprüche**

1. Granulatfilter für horizontalen Gasdurchtritt mit zwei im Abstand zueinander vertikal angeordneten, gasdurchlässigen Wänden (1, 2), einem aus einem Bodenteil (5) und zwei Seitenteilen bestehenden, mit den Wänden verbundenem Rahmen (3) und einer Granulatschüttung (4) in dem aus dem Rahmen und den Wänden gebildeten Raum, dadurch gekennzeichnet, daß im Bodenteil (5) des Rahmens (3) wenigstens eine, durch einen auf und ab bewegbaren Kolben (6) granulatdicht verschlossene Öffnung (7) angeordnet ist.

2. Granulatfilter nach Anspruch 1, dadurch gekennzeichnet, daß im Bodenteil (5) eine Mehrzahl von Öffnungen (7) vorgesehen ist, deren Flächensumme 30 bis 75% der Fläche des Bodenteils (5) beträgt.

3. Granulatfilter nach Anspruch 2, dadurch gekennzeichnet, daß die Öffnungen (7) kreisförmig ausgebildet sind.

4. Granulatfilter nach Anspruch 3, dadurch gekennzeichnet, daß der Durchmesser der Öffnungen (7) 60 bis 80% der Dicke der Granulatschüttung (4), gemessen in Strömungsrichtung, beträgt.

5. Granulatfilter nach einem der Ansprüche 1 bis 4, dadurch gekennzeichnet, daß Kolbenführungen (9) in Form von sich vom Bodenteil (5) aus nach unten erstreckenden Zylindern (9a) vorgesehen sind.

6. Granulatfilter nach Anspruch 5, dadurch gekennzeichnet, daß Kolben (6) vorgesehen sind, deren Mantelhöhe H 0,4 bis 0,5 D (= Kolbendurchmesser) beträgt und deren Hub derartig gewählt ist, daß sie im oberen Totpunkt um 0,2 bis 0,3 D gegenüber der Oberfläche des Bodenteils (5) in die Granulatschüttung (4) hineinragen und im unteren Totpunkt um 1,2 bis 2 D, gerechnet von der Oberfläche des Bodenteils (5) aus in die Zylinder (9a) eingetaucht sind.

7. Granulatfilter nach einem der Ansprüche 1 bis 4, dadurch gekennzeichnet, daß Kolbenführungen (9) aus sich vom Bodenteil (5) aus nach unten erstreckenden kurzen Zylindern (9b) mit sich daran anschließenden Stegen (9c) oder dergleichen vorgesehen sind.

8. Granulatfilter nach Anspruch 7, dadurch gekennzeichnet, daß Kolben (6) vorgesehen sind, deren Mantelhöhe H 2,5 bis 3 D beträgt und deren Hub derartig gewählt ist, daß sie im oberen Totpunkt um 2 bis 2,5 D, gemessen von der Oberfläche des Bodenteils (5) aus, in die Granulatschüttung (4) hineinragen und im unteren Totpunkt 0,2 bis 0,3 D gegenüber der Oberfläche des Bodenteils (5) in die kurzen Zylinder (9b) eingetaucht sind.

9. Granulatfilter nach einem der Ansprüche 1 bis 8, dadurch gekennzeichnet, daß die Kolben (6) mittels Kurbelbetrieb auf und ab bewegbar sind.

10. Granulatfilter nach einem der Ansprüche 1 bis 8, dadurch gekennzeichnet, daß die Kolben (6) pneumatisch oder hydraulisch auf und ab bewegbar sind.

11. Granulatfilter nach einem der Ansprüche 1 bis 10, dadurch gekennzeichnet, daß der Raum zwischen den Wänden (1) durch eine oder mehrere zu den Seitenteilen des Rahmens (3) parallele Zwischenwände (10) in zwei oder mehrere Kammern (11) unterteilt ist und daß die Zu- und Abfuhrkanäle für das zu filternde Medium eine entsprechende Unterteilung aufweisen.

12. Granulatfilter nach Anspruch 11, dadurch gekennzeichnet, daß jeder Kammer (11) zwei bis vier Kolben (6) zugeordnet sind.

13. Granulatfilter nach einem der Ansprüche 1 bis 12, dadurch gekennzeichnet, daß entweder die Kolben (6) oder die Kolbenführung (9) Bohrungen (14, 15) zum Einblasen von Spülluft in den Raum zwischen Kolben (6) und Kolbenführung (9) aufweist.

14. Verfahren zur Reinigung der Granulatschüttung in einem Granulatfilter nach einem der Ansprüche 1 bis 13 durch Rückspülung nach Absperrung des Strömungsweges für das zu filternde Medium,

dadurch gekennzeichnet, daß die Granulatschüttung (4) vor und/oder während der Rückspülung durch Auf- und Abbewegen der Kolben (6) aufgelockert wird.

15. Verfahren nach Anspruch 14, dadurch gekennzeichnet, daß in zeitlichen Abständen alle Kolben (6) gleichzeitig zwei bis drei mal auf und ab bewegt werden.

16. Verfahren nach Anspruch 14, dadurch gekennzeichnet, daß in zeitlichen Abständen die Kolben (6) nacheinander einzeln auf und ab bewegt werden.

17. Verfahren nach Anspruch 14, dadurch gekennzeichnet, daß die Kammern (11) in zeitlichen Abständen nacheinander gereinigt werden.

## Claims

1. Granular filter for a horizontal gas flow with two spaced-apart, vertical, gas-permeable walls (1, 2), a frame (3), consisting of a base part (5) and two side parts, which is connected to the walls, and a granular bed (4) in the space formed by the frame and the walls, characterised in that at least one opening (7) which is sealed tight against granulars by a piston (6) which can be moved up and down is arranged in the base part (5) of the frame (3).

2. Granular filter according to Claim 1, characterised in that a number of openings (7) are provided in the base part (5), the total surface area of which openings is 30 to 75% of the surface area of the base part (5).

3. Granular filter according to Claim 2, characterised in that the openings (7) are circular in shape.

4. Granular filter according to Claim 3, characterised in that the diameter of the openings (7) is 60 to 80% of the thickness of the granular bed (4), measured in the direction of flow.

5. Granular filter according to one of Claims 1 to 4, characterised in that piston guides (9) are provided in the form of cylinders (9a) extending from the base part (5) downwards.

6. Granular filter according to Claim 5, characterised in that pistons (6) are provided, the casing height H of which is 0.4 to 0.5 D (= piston diameter) and the stroke of which is selected so that at their upper dead centre they protrude into the granular bed (4) by 0.2 to 0.3 D from the surface of the base part (5) and at their lower dead centre they extend into the cylinders (9a) by 1.2 to 2 D, calculated from the surface of the base part (5).

7. Granular filter according to one of Claims 1 to 4, characterised in that piston guides (9) are provided which are made from short cylinders (9b) which extend from the base part (5) downwards with webs (9c) or the like connected thereto.

8. Granular filter according to Claim 7, characterised in that pistons (6) are provided, the casing height H of which is 2,5 to 3 D and the stroke of which is selected so that at their upper dead centre they protrude into the granular bed (4) by 2 to 2.5 D, measured from the surface of the base part (5), and at their lower dead centre they extend into the short cylinders (9b) by 0.2 to 0.3 D, with respect to the surface of the base part (5).

9. Granular filter according to one of Claims 1 to 8, characterised in that the pistons (6) can be moved up and down by means of a crank mechanism.

10. Granular filter according to one of Claims 1 to 8, characterised in that the pistons (6) can be moved up and down pneumatically or hydraulically.

11. Granular filter according to one of Claims 1 to 10, characterised in that the space between the walls (1) is divided into two or more chambers (11) by one or more partitions (10) parallel to the side parts of the frame (3) and that the passages for supplying and removing the medium to be filtered are correspondingly divided.

12. Granular filter according to Claim 11, characterised in that each chamber (11) is allocated two to four pistons (6).

13. Granular filter according to one of Claims 1 to 12, characterised in that either the pistons (6) or the piston guide (9) have bores (14, 15) for blowing cleaning air into the space between the piston (6) and the piston guide (9).

14. Process for cleaning the granular bed in a granular filter according to one of Claims 1 to 13 by a backflowing fluid after the path of flow for the medium to be filtered is blocked, characterised in that the granular bed (4) is loosened before and/or during the the flow of the backflowing fluid by moving the pistons (6) up and down.

15. Process according to Claim 14, characterised in that all the pistons (6) are moved up and down two to three times simultaneously in intervals of time.

16. Process according to Claim 14, characterised in that the pistons (6) are individually moved up and down successively in intervals of time.

17. Process according to Claim 14, characterised in that the chambers (11) are cleaned in succession in intervals of time.

## Revendications

1. Filtre de granulés pour le passage horizontal des gaz, comprenant deux parois (1, 2) disposées verticalement à distance l'une de l'autre et perméables au gaz, un cadre (3) constitué d'une partie formant fond (5) et de deux parties latérales et relié aux parois et un tas de granulés (4) dans l'espace formé par le cadre et par les parois, caractérisé en ce que dans la partie formant fond (5) du cadre (3), est prévue au moins une ouverture (7) qui est fermée de manière étanche aux granulés par un piston (6) déplacable vers le haut et vers le bas.

2. Filtre de granulés suivant la revendication 1, caractérisé en ce que dans la partie formant fond (5) est prévu un grand nombre d'ouvertures (7) dont la somme des surfaces représente de 30 à 75% de la surface de la partie formant fond (5).

3. Filtre de granulés suivant la revendication 2, caractérisé en ce que les ouvertures (7) sont circulaires.

4. Filtre de granulés suivant la revendication 3, caractérisé en ce que le diamètre des ouvertures (7) représente de 60 à 80% de l'épaisseur du tas de granulés (4) mesurée dans le sens de l'écoulement.

5. Filtre de granulés suivant l'une des revendications 1 à 4, caractérisé en ce qu'il est prévu

des guidages de piston (9) sous forme de cylindres (9a) s'étendant de la partie formant fond (5) vers le bas.

6. Filtre de granulés suivant la revendication 5, caractérisé en ce qu'il est prévu des pistons (6) dont la hauteur de la face latérale H représente de 0,4 à 0,5 D (diamètre du piston) et dont la course est choisie de façon qu'au point mort au supérieur, ils pénètrent de 0,2 à 0,3 D dans le tas de granulés (4) par rapport à la surface de la partie formant fond (5) et au point mort bas ils plongent de 1,2 à 2 D, calculé à partir de la surface de la partie formant fond (5), dans les cylindres (9a).

7. Filtre de granulés suivant l'une des revendications 1 à 4, caractérisé en ce que les guidages de piston (9) sont constitués de cylindres (9b) courts s'étendant de la partie formant fond (5) vers le bas et de barrettes (9c) ou d'éléments analogues s'y raccordant.

8. Filtre de granulés suivant la revendication 7, caractérisé en ce qu'il est prévu des pistons (6) dont hauteur de la surface latérale H représente de 2,5 à 3 D et dont la course est telle qu'au point mort haut ils pénètrent de 2 à 2,5 D, mesuré à partir de la surface de la partie formant fond (5), dans le tas de granulés (4) et au point mort bas ils plongent de 0,2 à 0,3 D, par rapport à la surface de la partie fond (5), dans le cylindre (9b) courts.

9. Filtre de granulés suivant l'une des revendications 1 à 8, caractérisé en ce que les pistons (6) sont déplacables vers le haut et vers le bas au moyen d'un entraînement à manivelle.

10. Filtre de granulés suivant l'une des revendications 1 à 8, caractérisé en ce que les pistons (6) sont déplacables vers le haut et vers le bas par voie pneumatique ou hydraulique.

11. Filtre de granulés suivant l'une des revendications 1 à 10, caractérisé en ce que l'espace compris entre les parois (1) est subdivisée en deux ou plusieurs chambres (11) par une ou par plusieurs parois intermédiaires (10) parallèles aux parties latérales du cadre (3) et en ce que les canaux d'amenée et d'évacuation du milieu à filtrer ont une subdivision correspondante.

12. Filtre de granulés suivant la revendication 11, caractérisé en ce qu'à chaque chambre (11) sont associés de deux à quatre pistons (6).

13. Filtre de granulés suivant l'une des revendications 1 à 12, caractérisé en ce que le piston (6) et le guidage de piston (9) comportent des perçages (14, 15) d'insufflation d'air de balayage dans l'espace compris entre le piston (6) et le guidage de piston (9).

14. Procédé de nettoyage du tas de granulés d'un filtre de granulés suivant l'une des revendications 1 à 13, par lavage en retour, après fermeture du trajet d'écoulement du milieu à filtrer, caractérisé en ce qu'il consiste à ameublir le tas de granulés (4) avant et/ou pendant le lavage en retour en faisant monter et descendre le piston (6).

15. Procédé suivant la revendication 14, caractérisé en ce qu'il consiste à déplacer vers le haut et vers le bas deux à trois fois tous les pistons en même temps à des intervalles de temps.

16. Procédé suivant la revendication 14, caractérisé en ce qu'il consiste à déplacer vers le haut et vers le bas individuellement les pistons (6) l'un après l'autre à des intervalles de temps.

17. Procédé suivant la revendication 14, caractérisé en ce qu'il consiste à nettoyer successivement les chambres (11) à des intervalles de temps.

# F i g.1

# F i g . 2

EP 0 224 948 B1

EP 0 224 948 B1

# Fig.3